(19) Europäisches Patentamt
European Patent Office
Office européen des brevets

(11) Numéro de publication: 0 126 701
B1

(12) # FASCICULE DE BREVET EUROPÉEN

(45) Date de publication du fascicule du brevet: 14.10.87

(51) Int. Cl.⁴: H 01 M 4/58

(21) Numéro de dépôt: 84420088.1

(22) Date de dépôt: 16.05.84

(54) **Composés d'insertion du graphite à performances améliorées et application électrochimique de ces composés.**

(30) Priorité: 19.05.83 FR 8308266
13.04.84 FR 8406365

(43) Date de publication de la demande: 28.11.84 Bulletin 84/48

(45) Mention de la délivrance du brevet: 14.10.87 Bulletin 87/42

(84) Etats contractants désignés: AT BE CH DE GB IT LI LU NL SE

(56) Documents cité:
DE-A-2 139 714
DE-A-3 231 243
FR-A-943 870
FR-A-2 442 514
GB-A-2 028 570
US-A-3 956 018
US-A-4 009 323
US-A-4 041 220

JOURNAL OF THE ELECTROCHEMICAL SOCIETY, vol. 125, no. 5, mai 1978, pages 687-692; S.L. DESHPANDE et al.: "Lithium dimethyl sulfite graphite cell"
JOURNAL OF THE ELECTROCHEMICAL SOCIETY, vol. 120, no. 9, septembre 1973, pages 1161-1168; H.F. HUNGER et al.: "Cathodic discharge of graphite intercalation compounds in organic electrolytes"

(73) Titulaire: Le Carbone- Lorraine S.A., Tour Manhattan 5-6 Place de l'Iris La Défense 2, F-92400 Courbevoie (FR)

(72) Inventeur: Touzain, Philippe, 89, chemin des Jacobins, F-38830 St Ismier (FR)
Inventeur: Yazami, Rachid, 28, route de Savoie, F-38420 Domene (FR)
Inventeur: Maire, Jacques, 10, rue du Jourdain, F-75020 Paris (FR)

(74) Mandataire: Pascaud, Claude, PECHINEY 28, rue de Bonnel, F-69433 Lyon Cedex 3 (FR)

(56) Documents cité: (suite)
SOLID STATE IONICS, vol. 1, 1980, pages 87-110, North-Holland Publishing Company; N. WATANABE: "Two types of graphite fluorides, (CF)n and (C2F)n, and discharge characteristics and mechanisms of electrodes of (CF)n and (C2F)n in lithium batteries"
CHEMICAL ABSTRACTS, vol. 94, no. 13, juin 1981, page 527, no. 216434h, Columbus, Ohio, USA; S. FLANDROIS et al.: "Intercalation compounds of graphite with nickel chloride as cathode material for alkaline batteries"
PATENTS ABSTRACTS OF JAPAN, vol. 7, no. 76(E-167)(1221), 30 mars 1983

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 126 701 B1

LIBER, STOCKHOLM 1987

**Description**

La présente invention est relative à la mise en oeuvre de composés d'insertion du graphite à performances améliorées dans des électrodes de générateurs électrochimiques et en particulier de piles à haute densité d'énergie utilisant dans leur chaîne électrochimique des métaux alcalins comme le lithium.

Les recherches entreprises ces dernières années sur les piles à haute densité d'énergie utilisant du lithium à l'anode ont souvant été orientées vars la mise au point de nouveaux matériaux de cathode. Les conditions exigées pour de tels matériaux (faible masse équivalente, haut potentiel par rapport à l'anode, bonne conductivité mixte électronique et ionique, insolubilité dans l'électrolyte, etc ...) sont difficiles à réunir et des limitations d'utilisation apparaissent vite.

Les composés d'insertion du graphite ont été largement étudiés en vue de leurs applications électrochimiques: fluorure graphitique CF, oxyde graphitique composés d'insertion avec les halogénures métalliques, etc ...

Ainsi, dans le domaine de la haute énergie, avec des piles à anode au lithium, des résultats intéressants ont été obtenus svec une cathode contenant du fluorure graphitique (voir par exemple GB-A-2 028 570).

Des résultats encourageants ont également été obtenus avec une cathode contenant de l'oxyde graphitique. Toutefois, leur tension en cours d'utilisation s'abaisse assez rapidement et leur rendement énergétique reste médiocre.

Le but principal de l'invention est de pallier ces inconvénients d'électrodes connues en améliorant les performances des composés d'insertion du graphite, entrant dans leur composition.

Ce but est atteint selon l'invention en ce que les composés d'insertion du graphite sont obtenus à partir de poudre de graphie ayant une grande surface spécifique, d'au moins 100 $m^2/g$, et une faible granulométrie au plus égale à 4 $\mu m$.

Ce graphite "haute surface" peut par exemple être obtenu par broyage sous vide de graphite naturel dans un broyeur vibrant (Thèse M.J. Kent Ph. D. thesis City University London 1973).

On constate en effet qu'en réalisant des composés d'insertion de graphite par les méthodes propres à chaque type de composé, mais en utilisant une telle poudre de graphite, on améliore nettement leurs performances dans le domaine électrochimique.

Le choix du composé d'insertion selon l'invention dépend de l'application envisagée.

Ainsi, comme constituants de cathodes de piles au lithium, ces composés peuvent être avantageusement l'oxyde graphitique ou le composé d'insertion graphite-$NiCl_2$.

Lorsque le constituant choisi est l'oxyde graphitique, celui-ci peut être mélangé à du graphite ou a un composé d'insertion du graphite avec un chlorure de métal de transition tel que Fe, Ni, Co, Cu, Mn.

Les exemples suivants donnés à titre indicatif et non limitatif, illustrent l'invention:

**Exemple 1**: OXYDE GRAPHITIQUE

On prépare de l'oxyde graphitique à partir de poudre de graphite de surface spécifique comprise entre 100 et 400 $m^2/g$ et de granulométrie comprise entre 2 et 4 $\mu m$.

La méthode de préparation utilisée est la méthode de Brodie: 1 g de graphite est traité par 10 ml de $HNO_3$ concentré avec 2 g de $KClo_3$ · A 60°C, sous atmosphère d'azote sec, le mélange maintenu en continuelle agitation donne en deux heures:

$$8\ C + KClo_3 + H_2O \xrightarrow{HNO3} 2\ C_4OOH + KCl$$

L'oxyde graphitique obtenu est lavé plusieurs fois avec de l'eau distillée puis centrifugé jusqu'à disparition des ions $NO_3^-$, $Cl^-$, $ClO_3^-$, $H^+$ et $K^+$ dans les eaux de rinçage. Il est ensuite séché sous vide à température ordinaire pendant 24 heures.

On réalise alors à partir de l'oxyde graphitique obtenu, des électrodes en le mélangeant avec une poudre de graphite de Ceylan, puis en comprimant le mélange. Le pourcentage en poids de graphite est variable. Il peut aller de 50 % environ (laboratoire) à 10 % (industrie).

Ces électrodes ainsi réalisées sont montées comme cathodes dans des piles dont l'anode est en lithium et l'électrolyte une solution 1M de $LiClO_4$ dans du carbonate de propylène, de manière à constituer plusieurs piles identiques.

On applique à chaque pile ainsi réalisée, une décharge intentiostatique différente, c'est-à-dire que l'on impose une densité de courant constante i différente pour chaque pile et on mesure la tension de la pile en fonction du pourcentage d'utilisation d'oxyde graphitique, c'est-à-dire du rendement faradique Ri. Le rendement faradique maximum pratique pour une pile donnée correspond à l'énergie débitée pour la plus

faible valeur de tension e participant à la définition du e.

La valeur de la densité d'énergie D en Wh/kg est donnée par la relation:

$$D = \frac{Q \langle e \rangle}{m \times 3600}$$

avec

Q = quantité totale d'électricité disponible dans la pile (en coulombs)

$\langle e \rangle$ = valeur moyenne de la tension de palier (en volts), pour une densité de courant donnée

m = masse de la fraction électroactive de la cathode et de l'anode (en kg).

La réaction bilan de la pile, en prenant comme formule de l'oxyde graphitique $C_4OOH$ est:

$$3\,Li + C_4OOH \rightarrow 4\,C + Li_2O + LiOH$$

en conséquence:

Q = 96500 x 3 (en coulombs)

$m = M_{C_4OOH} + 3\,M_{Li}$ (en kg)

La densité d'énergie théorique Dth de le pile est la valeur de D pour i=0.

Le rendement énergétique de la pile $R_E$ est:

$$R_E = \frac{\langle e \rangle i}{\langle e \rangle 0} Ri$$

La densité d'énergie pratique Dpr est donnée par la relation:

$$Dpr = Dth \times R_E$$

Le tableau I rassemble les résultats.

**Tableau 1**

| i ($\mu$A/cm$^2$) | $\langle e \rangle$ i (V) | Dth (Wh/kg) | Ri % | $R_E$ % | Dpr (Wh/kg) |
|---|---|---|---|---|---|
| 0 | 3 | 2365 | | | - |
| 25 | 2,7 | - | 95 | 85 | 2020 |
| 100 | 2,5 | - | 90 | 75 | 1770 |
| 630 | 2,35 | - | 85 | 67 | 1580 |

Si l'on compare ces résultats à ceux obtenus dans des piles au lithium identiques à la différence que la cathode est constituée de graphite et d'un oxyde graphitique provenant d'un graphite quelconque, on constate que:

- la courbe de tension f (Ri) présente un palier plat pour le Graphite Haute surface et pas pour les autres,
- la valeur du palier est notablement supérieure aux tensions correspondantes à même Ri des autres piles à oxyde graphitique de graphite naturel non broyé sous vide
- le rendement énergétique de 75 à 85 % est 1,2 à 3 fois plus élevé qu'avec ces autres piles.

On voit ainsi tout l'intérêt de l'oxyde graphitique obtenu à partir de poudre de graphite à haute surface spécifique et à faible granulométrie selon l'invention.

Par ailleurs, on peut établir des comparaisons avec d'autres piles dont les caractéristiques sont rassemblées dans le tableau 2 suivant:

**Tableau 2**

| Type de piles | Masse équivalente | | f.e.m. initiale | densité d'énirgie théorique |
|---|---|---|---|---|
| | Cathode seule | Cathode + Anode | V | Wh/kg |
| $Li/C_4OOH$ selon l'invention | 27 | 34 | 3 | 2365 |
| Li/(CF) | 31 | 38 | 3 | 2116 |
| Zn Mn $O_2$ (Leclanché) | 87 | 120 | 1,5 | 335 |

On voit nettement se détacher la pile $Li/C_4OOH$ selon l'invention tant au point de vue masse équivalente que densité d'énergie. De plus, si on la compare à la pile Li/CF, dont les performances sont les plus proches, la pile $Li/C_4OOH$ est moins chère: l'oxyde graphitique revient moins cher que le fluorure graphitique.

**Exemple 2**

Cet exemple est une variante de l'exemple 1.

La différence est que, lors de la réalisation d'électrodes, le graphite mélangé à l'oxyde graphitique est remplacé par le composé d'insertion de graphite avec $MnCl_2$: $C_7MnCl_2$ en proportion équimassique.

Les caractéristiques de la pile obtenue sont les suivantes:

| i ($\mu/cm^2$) | <e> (V) | Dth (Wh/kg) | Ri % | $R_E$% |
|---|---|---|---|---|
| 0 | 2,9 | 1550 | | |
| 100 | 2,4 | - | 90 | 75 |

La pile ainsi constituée présente l'avantage de pouvoir fournir de grandes valeurs de densité de courant pendant des temps courts: de l'ordre de 10 $mA/cm^2$ pendant quelques minutes.

Dans ces deux exemples, la méthode de préparation de l'oxyde graphitique choisie est la méthode de Brodie. Elle peut être remplacée par toute autre méthode et en particulier par celle de Staudenmaier qui consiste à oxyder lentement le graphite par un mélange de chlorate de potassium ou de sodium, d'acide sulfurique concentré et d'acide nitrique fumant, en maintenant le mélange à température ambiante. Cette méthode évite la disparition des grains les plus fins.

**Exemple 3**

On prépare de l'oxyde graphitique par la méthode de Brodie décrite dans l'exemple 1, respectivement à partir:

- de graphite "haute surface", de granulométrie comprise entre 2 et 4 μm
- de graphite "poudre fine", de granulométrie comprise entre quelques dixièmes et quelques μm,

en leur faisant subir une oxydation.

A partir des différents oxydes graphitiques obtenus, on réalise alors des électrodes de manière identique à celle décrite dans l'exemple 1, et on monte les électrodes obtenues comme cathodes dans des piles dont l'anode est en lithium et l'électrolyse une solution 1M de $LiClO_4$ dans du carbonate de propylène.

Les différentes piles ainsi constituées sont alors soumises à des décharges intentiostatiques.

Le tableau 3 rassemble les résultats comparatifs des piles selon l'oxyde graphitique utilisé.

**Tableau 3**

| Orginale graphite | i (μA/cm2) | <e> i V | Dth (Wh/kg) | Ri % | $R_E$ % | Dpr (Wh/kg) |
|---|---|---|---|---|---|---|
| | 0 | 3 | 2365 | - | - | - |
| Haute surface + oxydation | 630 | 2,35 | - | 85 | 67 | 1580 |
| Poudre fine + oxydation | 630 | 2,3 | - | 80 | 60 | 1420 |

Les figures 1 et 2 montrent les courbes de décharge:

- d'une part, avec des électrodes comportant de l'oxyde graphitique obtenu soit à partir de graphite "haute surface" (O.G. Haute surface), soit à partir de graphite "poudre fine" (O.C. Poudre fine), ayant subi une oxydation, pour différentes densités de courant (figure 1)
- d'autre part, avec des électrodes comportant de l'oxyde graphitique obtenu soit à partir de graphite "haute surface" soit à partir de graphite "poudre fine" ayant subi une oxydation, pour une même valeur de densité de courant (figure 2).

Le tableau et les figures montrent que l'oxyde graphitique provenant d'un graphite "haute surface" conduit à de meilleures caractéristiques électrochimiques que l'oxyde graphitique provenant d'un graphite "poudre fine" oxydée.

**Exemple 4**: COMPOSE D'INSERTION GRAPHITE/$NiCl_2$

On prépare des composés d'insertion graphite/$NiCl_2$ à partir de différentes poudres de graphite:

- graphite ayant une surface spécifique de 300 $m^2/g$ et une granulométrie $<3$ μm, selon l'invention
- graphite naturel de granulométrie comprise entre 80 et 125 μm,
- graphite naturel (de Madagascar) en fines paillettes de tailles de l'ordre du mm,
- pyrographite avec une granulométrie $\simeq$ 3 mm.

La méthode de préparation, identique dans les 4 cas, consiste à faire un mélange du graphite et de $NiCl_2$, à déahydrater ce mélange a 300°C pendant 10 heures sous vide, à introduire du chlore en quantité suffisante pour assurer une pression de 3 atm à 25°C, à sceller l'enceinte contenant ces produits et enfin à chauffer à 700°C.

Les produits obtenus sont lavés à l'acétonitrile pour éliminer l'exès de $NiCl_2$ puis séchés à l'étuve.

Par analyse aux Rayons X, on constate que le graphite suivant l'invention conduit à un composé d'insertion du premier stade pratiquement pur, tandis que si la taille des grains du graphite augmente, il se forme de moins en moins du premier stade au profit du second, respectivement $C_6NiCl_2$ et $C_{12}NiCl_2$.

Le tableau 4 regroupe les résultats en fonction du graphite initial.

**Tableau 4**

| Graphite initial | Granulométrie | Abondance du composé obtenu | | |
|---|---|---|---|---|
| | | 1er Stade | 2ème stade | Graphite |
| Graphite haute surface | $\leqslant$ 3 μm | très riche | traces | néant |
| Graphite naturel | 80 - 125 um | traces | présent | néant |
| Graphite naturel | 1 mm | traces | abondant | traces |
| Pyrographite | $\simeq$ 5 mm | traces | abondant | traces |

On réalise à partir du composé d'insertion graphite/$NiCl_2$ du premier stade obtenu selon l'invention des électrodes en matriçant simplement le composé.

Ces électrodes sont montées comme cathodes dans des piles au lithium dont l'anode est en lithium et l'électrolyte une solution 1M de $LiClO_4$ dans du carbonate de propylène, de manière à constituer plusieurs piles identiques. On en mesure les caractéristiques par décharge intentiostatique comme dans l'exemple 1.

Le tableau 5 regroupe les résultats obtenus:

**Tableau 5**

| i (μA/cm²) | <e> i (V) | Dth (Wh/kg) | Ri % | $R_E$ % | Drp (Wh/kg) |
|---|---|---|---|---|---|
| 0 | 2,8 | 700 | | | - |
| 100 | 2,5 | - | 95 | 85 | 600 |

Puisque le graphite "haute surface" permet d'obtenir le premier stade du composé d'insertion graphite-$NiCl_2$, on obtient en conséquence une matière active d'électrode de capacité énergétique 30 % plus élevée que celle des autres électrodes de même nature connues jusqu'à présent.

La voltamétrie cyclique indique une réversibilité d'électrodes positives n'ayant été déchargées que partiellement (50 %).

## Revendications

1. Electrode de générateur électrochimique, dont la composition, comprend, avant son utilisation, un composé d'insertion de graphite, caractérisée en ce que le composé d'insertion de graphite est obtenu à partir d'un graphite ayant une surface spécifique d'au moins 100 m²/g et une granulométrie au plus égale à 4 μm.

2. Electrode de générateur électrochimique selon la revendication 1, caractérisée en ce que le composé d'insertion du graphite est constitué par de l'oxyde graphitique.

3. Electrode de générateur électrochimique selon la revendication 1, caractérisée en ce que le composé d'insertion est constitué par du graphite/$NiCl_2$ du premier stade, $C_6NiCl_2$.

4. Electrode de générateur électrochimique selon la revendication 2, caractérisée en ce que l'oxyde graphitique est mélangé à du graphite.

5. Electrode de générateur électrochimique selon la revendication 2, caractérisée en ce que l'oxyde graphitique est mélangé à un composé d'insertion du graphite avec un chlorure de métal de transition.

6. Electrode de générateur électrochimique selon la revendication 5, caractérisée en ce que le composé d'insertion du graphite avec un chlorure de métal de transtition est le composé $C_7MnCl_2$.

7. Générateur électrochimique caractérisé en ce qu'il comporte au moins une électrode selon l'une quelconque des revendications 1 à 6.

8. Générateur électrochimique selon la revendication 7, caractérisé en ce que sa chaîne électrochimique étant du type:

Li/solution 1M de $LiClO_4$ dans du carbonate de propylène/oxyde graphitique mélangé à du graphite,

- sa tension de palier lors d'une décharge intentiostatique avec une densité de courant de 100 μA/cm² est de 2,5 V.
- sa densité d'énergie théorique est de 2365 Wh/kg
- son rendement faradique est de 90 %
- son rendement énergétique est de 75 %.

9. Générateur électrochimique selon la revendication 7, caractérisé en ce que sa chaîne électrochimique étant du type:

Li/solution 1M de $LiClO_4$ dans du carbonate de propylène/composé d'insertion graphite-$NiCl_2$, $C_6NiCl_2$,

- sa tension de palier lors d'une décharge intentiostatique avec une densité de courant de 100 μA/cm² est de 2,5 V.
- sa densité d'énergie théorique est de 700 Wh/kg
- son rendement faradique est de 95 %
- son rendement énergétique est de 85 %.

## Patentansprüche

1. Elektrochemische Generatorelektrode mit, vor der Verwendung, einer Graphiteinlagerungsverbindung,
<u>dadurch gekennzeichnet,</u>
daß die Graphiteinlagerungsverbindung aus einem Graphit mit einer spezifischen Oberfläche von mindestens 100 m²/g und einer Teilchengröße von höchstens 4 μm erhältlich ist.

2. Elektrochemische Generatorelektrode nach Anspruch 1,
<u>dadurch gekennzeichnet,</u>
daß die Graphiteinlagerungsverbindung aus Graphitoxid besteht.

3. Elektrochemische Generatorelektrode nach Anspruch 1,
<u>dadurch gekennzeichnet,</u>
daß die Graphiteinlagerungsverbindung aus Graphit/$NiCl_2$ der ersten Stufe, $C_6NiCl_2$, besteht.

4. Elektrochemische Generatorelektrode nach Anspruch 2,
<u>dadurch gekennzeichnet,</u>
daß das Graphitoxid mit Graphit vermischt ist.

5. Elektrochemische Generatorelektrode nach Anspruch 2,

dadurch gekennzeichnet,
daß das Graphitoxid mit einer Graphiteinlagerungsverbindung mit einem Übergangsmetallchlorid vermischt ist.

6. Elektrochemische Generatorelektrode nach Anspruch 5,
dadurch gekennzeichnet,
daß die Graphiteinlagerungsverbindung mit einem Übergangsmetallchlorid die Verbindung $C_7MnCl_2$ ist.

7. Elektrochemischer Generator,
dadurch gekennzeichnet,
daß er mindestens eine Elektrode nach einem der Ansprüche 1 bis 6 enthält.

8. Elektrochemischer Generator nach Anspruch 7,
dadurch gekennzeichnet,
daß seine elektrochemische Kette folgende Merkmale aufweist:
- Lithiumlösung von 1 mol $LiClO_4$ in Propylencarbonat/mit Graphit vermischtem Graphitoxid,
- Stufenspannung bei einer beabsichtigten statischen Entladung mit einer Stromdichte von 100 µA/cm$^2$: 2,5 V,
- theoretische Energiedichte: 2365 Wh/kg,
- Faraday'sche Ausbeute: 90 %,
- Energieausbeute: 75 %.

9. Elektrochemischer Generator nach Anspruch 7,
dadurch gekennzeichnet,
daß seine elektrochemische Kette folgende Merkmale aufweist:
- Lithiumlösung aus 1 mol $LiClO_4$ in Propylencarbonat/Graphit-einlagerungsverbindung-$NiCl_2$, $C_6NiCl_2$,
- Stufenspannung bei einer beabsichtigten statischen Entladung mit einer Stromdichte von 100 µA/cm$^2$ : 2,5 V,
- theoretische Energiedichte: 700 Wh/kg,
- Faraday'sche Ausbeute: 95 %,
- Energieausbeute: 85 %.

## Claims

1. An electrochemical generator electrode whose composition comprises, prior to use thereof, a graphite insertion compound characterised in that the graphite insertion compound is produced from a graphite having a specific surface area of at least 100 m$^2$/g and a granulometry which is at most equal to 4 µm.

2. An electrochemical generator electrode according to claim 1 characterised in that the graphite insertion compound is formed by graphitic oxide.

3. An electrochemical generator electrode according to claim 1 characterised in that the insertion compound is formed by graphite/NiCl of the first stage, $C_6NiCl_2$.

4. An electrochemical generator electrode according to claim 2 characterised in that the graphitic oxide is mixed with graphite.

5. An electrochemical generator electrode according to claim 2 characterised in that the graphitic oxide is mixed with an insertion compound of graphite with a transition metal chloride.

6. An electrochemical generator electrode according to claim 5 characterised in that the insertion compound of graphite with a transition metal chloride is the compound $C_7MnCl_2$.

7. An electrochemical generator characterised in that it comprises at least one electrode according to any one of claims 1 to 6.

8. An electrochemical generator according to claim 7 characterised in that its electrochemical chain being of the following type:
Li/1M solution of $LiClO_4$ in propylene carbonate/graphitic oxide mixed with graphite,
- its plateau voltage upon intentiostatic discharge with a current density of 100 µA/cm$^2$ is 2.5 V,
- its theoretical energy density is 2365 Wh/kg,
- its faradic efficiency is 90 %, and
- its energy efficiency is 75 %.

9. An electrochemical generator according to claim 7 characterised in that its electrochemical chain being of the type:
Li/1M solution of $LiClO_4$ in propylene carbonate/graphite insertion compound-$NiCl_2$, $C_6NiCl_2$,
- its plateau voltage upon intentiostatic discharge with a current density of 100 µA/cm$^2$ is 2.5 V,
- its theoretical energy density is 700 Wh/kg,
- its faradic efficiency is 95 %, and
- its energy efficiency is 85 %.

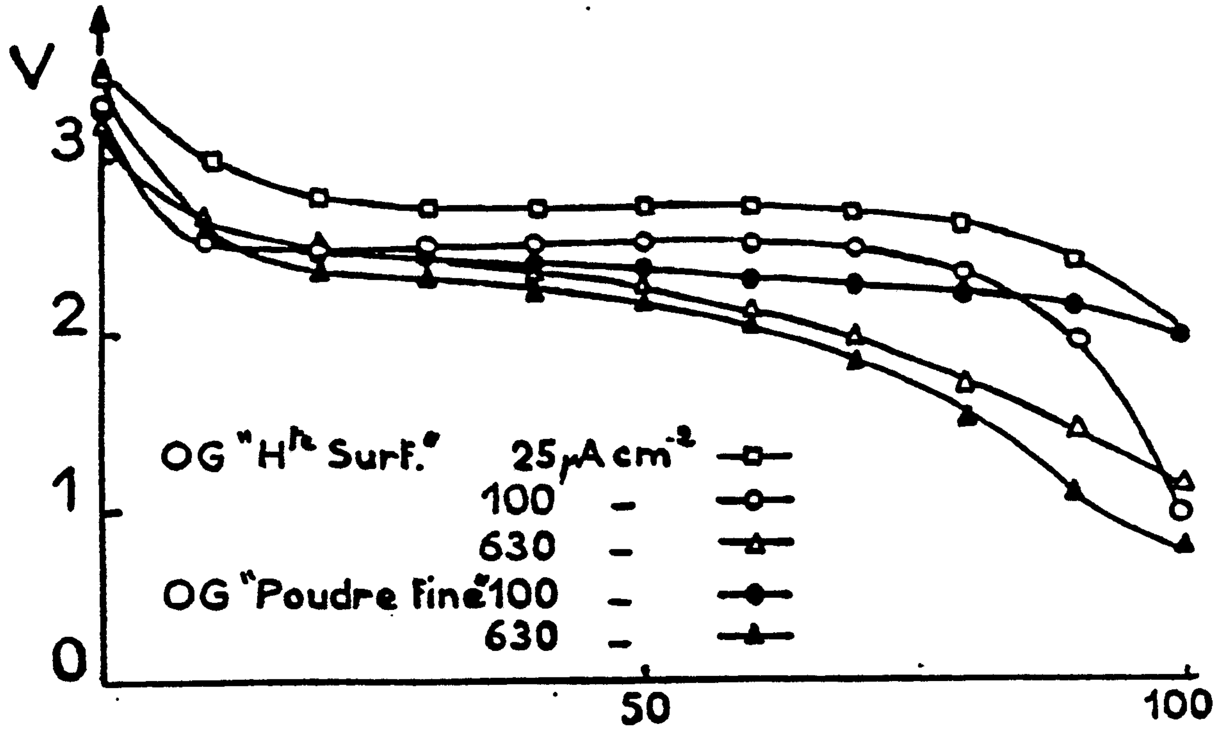

V
3
2
1
0
OG "H^{ts} Surf." 25 μA cm⁻²
100 -
630 -
OG "Poudre fine" 100 -
630 -
50
100
% Profondeur de décharge


fig. 1

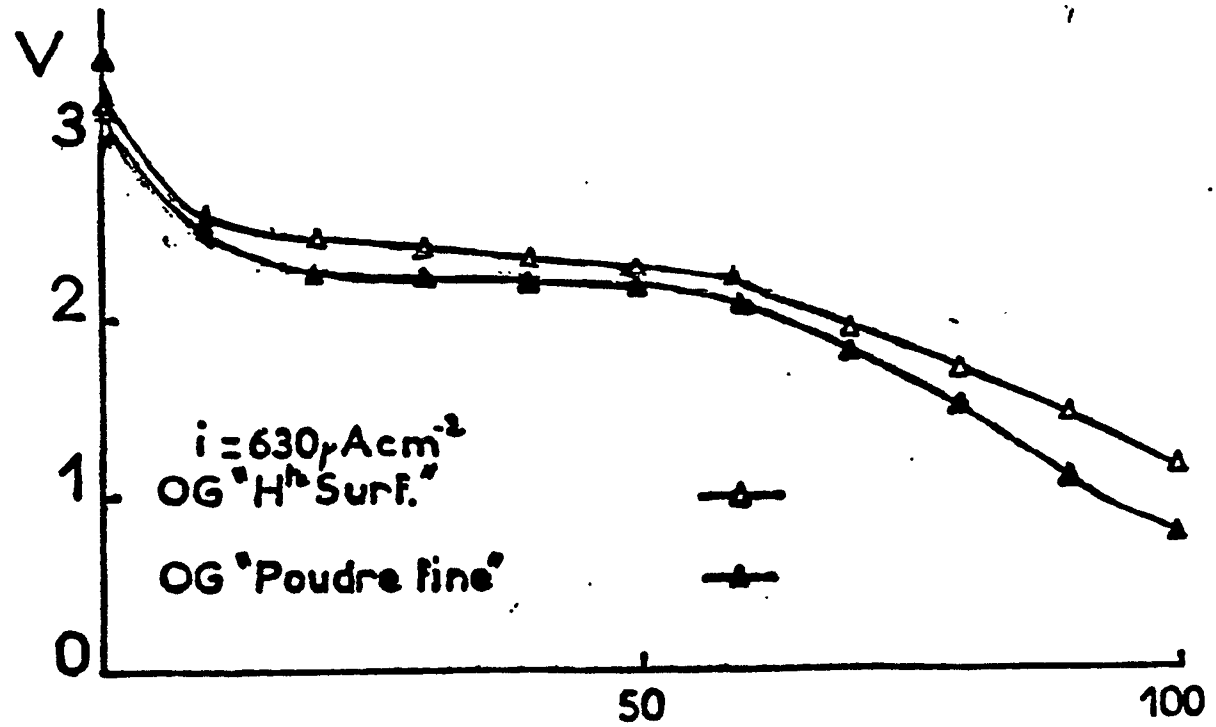

V
3
2
1
0
i = 630 μA cm⁻²
OG "H^{ts} Surf."
OG "Poudre fine"
50
100
% Profondeur de décharge


fig. 2